# EUROPÄISCHE PATENTANMELDUNG

(11) **EP 2 690 118 A1**
(43) Veröffentlichungstag der Anmeldung: **29.01.2014**
(21) Anmeldenummer: 12178308.8
(22) Anmeldetag: 27.07.2012
(51) Int. Cl.: C08G 18/18, C08G 18/40, C08G 18/48, C08G 18/63, C08G 18/66, C08G 18/79, C08K 3/32, C08K 5/00, C08K 5/521, C08K 5/523, C08K 5/524, C08K 5/5333, C08J 9/00

(54) **Polyurethane enthaltend Phosphorverbindungen**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Polyurethane, erhältlich durch Vermischen zu einer Reaktionsmischung von (a) Polyisocyanat, (b) polymeren Verbindungen mit gegenüber Isocyanaten reaktiven Gruppen, (c) Katalysatoren, enthaltend einbaubare Aminkatalysatoren, (d) Phosphorsäureester, Polyphosphate, Phosphonsäureester und/oder Phosphorigsäureester und gegebenenfalls (e) Treibmittel, (f) Kettenverlängerungs- und oder Vernetzungsmittel und (h) Hilfsmittel und/oder Zusatzstoffe und ausreagieren der Reaktionsmischung zum Polyurethan, wobei der Phosphorsäureester der allgemeinen Formel (R¹-O)₃-P=O entspricht, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe, bestehend aus Stickstoff, Sauerstoff, Fluor, Chlor und Brom, enthalten, das Polyphosphat der allgemeinen Formel -[P(O)(O⁻R'⁺)-O]ₙ- entspricht, wobei n für ganze Zahlen von 2 bis 20 steht, R'⁺ für Alkalimetallkationen oder Ammoniumkationen steht, der Phosphonsäureester der allgemeinen Formel (R³)(R²-O)₂-P=O entspricht, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen steht und der Phosphorigsäureester der allgemeinen Formel (R⁴-O)₃-P entspricht, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten. Weiter betrifft die Erfindung ein Verfahren zur Herstellung solcher Polyurethane und deren Verwendung im Automobilinnenraum.

## Beschreibung

Die vorliegende Erfindung betrifft Polyurethane, erhältlich durch Vermischen zu einer Reaktionsmischung von (a) Polyisocyanat, (b) polymeren Verbindungen mit gegenüber Isocyanaten reaktiven Gruppen, (c) Katalysatoren, enthaltend einbaubare Aminkatalysatoren, (d) Phosphorsäureester, Polyphosphate, Phosphonsäureester und/oder Phosphorigsäureester und gegebenenfalls (e) Treibmittel, (f) Kettenverlängerungs- und oder Vernetzungsmittel und (h) Hilfsmittel und/oder Zusatzstoffe und ausreagieren der Reaktionsmischung zum Polyurethan, wobei der Phosphorsäureester der allgemeinen Formel (R¹-O)₃-P=O entspricht, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe, bestehend aus Stickstoff, Sauerstoff, Fluor, Chlor und Brom, enthalten, das Polyphosphat der allgemeinen Formel -[P(O)(O-R'⁺)-O]ₙ- entspricht, wobei n für ganze Zahlen von 2 bis 20 steht, R'⁺ für Alkalimetallkationen oder Ammoniumkationen steht, der Phosphonsäureester der allgemeinen Formel (R³)(R²-O)₂-P=O entspricht, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen, der weitere Heteroatome enthalten kann, steht und der Phosphorigsäureester der allgemeinen Formel (R⁴-O)₃-P entspricht, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten. Weiter betrifft die Erfindung ein Verfahren zur Herstellung solcher Polyurethane und deren Verwendung im Automobilinnenraum.

Polyurethane zeichnen sich durch vielfältige Einsatzmöglichkeiten aus. Insbesondere im Automobilbau werden diese häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster. An Polyurethane, die im Automobilbereich, insbesondere im Automobilinnenraum eingesetzt werden, werden hohe Anforderungen an die mechanischen Eigenschaften sowie an die Alterungsbeständigkeit gesetzt. So ist es erforderlich, dass über die Lebensdauer eines Automobils wichtige Eigenschaften, wie Geräuschdämmung, Polstereigenschaften oder Dämpfungseigenschaften eines mechanischen Aufpralls, beispielsweise im Fall eines Unfalls, erhalten bleiben.

Dabei herrschen im Automobil extreme Bedingungen, die die Alterung des Polyurethans beschleunigen. So können Temperaturen im Bereich von minus 10 °C und weniger sowie von mehr als 60 °C, bei Sonneneinstrahlung auch mehr als 100 °C erreicht werden. Die Luftfeuchtigkeit kann dabei bis zu 100 % relative Feuchte betragen.

Neben diesen extremen Klimabedingungen ist es auch erforderlich, dass im Automobilinnenraum eingesetzte Polyurethane möglichst geringe Emissionen flüchtiger Verbindungen verursachen. Diese rühren meist vom Einsatz flüchtiger Aminkatalysatoren. Um Emissionen zu reduzieren werden diese flüchtigen Aminkatalysatoren ganz oder teilweise durch einbaubare Katalysatoren ersetzt. Diese Verbindungen katalysieren die Polyurethanreaktion, verfügen aber gleichzeitig auch über gegenüber Isocyanatgruppen reaktive Gruppen, wodurch ein fester Einbau der Katalysatoren in das Polyurethan erfolgt. Diese einbaubaren Katalysatoren führen jedoch meist zu einer Verschlechterung der mechanischen Eigenschaften des erhaltenen Polyurethans, insbesondere nach Hitzelagerung oder Feucht-Wärmelagerung, das heißt bei Bedingungen, wie sie im Automobilinnenraum häufig erreicht werden.

Der Einsatz von Flammschutzmitteln in Polyurethanen ist bekannt. So beschreibt WO 2009065826 den Einsatz von Alkylphosphaten zur Herstellung von Polyurethanintegralschaumstoffen, unter anderem zur Verwendung als Lenkräder, beschrieben. Der Einsatz von einbaubaren Katalysatoren in Kombination mit Phosphorsäureestern ist in WO 2009065826 nicht beschrieben.

Weiter beschreibt EP 2374843 den Einsatz von Phosphorsäureestern bei der Verbesserung der Alterungsbeständigkeit bei Kabelummantelungen aus Polyurethan. Als aktive Substanz werden dabei Zink- und Borverbindungen genannt.

Aufgabe der Vorliegenden Erfindung war eine Verbesserung der Alterungseigenschaften von Polyurethanen, die einbaubare Katalysatoren enthalten, insbesondere eine Verbesserung der Hitzealterungseigenschaften und der Feucht-Wärme-Alterungseigenschaften ohne eine wesentliche Verschlechterung der allgemeinen mechanischen Eigenschaften nach der Alterung.

Die Aufgabe wird gelöst durch Polyurethane, erhältlich durch Vermischen zu einer Reaktionsmischung von (a) Polyisocyanat, (b) polymeren Verbindungen mit gegenüber Isocyanaten reaktiven Gruppen, (c) Katalysatoren, enthaltend einbaubare Aminkatalysatoren, (d) Phosphorsäureester, Polyphosphate, Phosphonsäureester und/oder Phosphorigsäureester und gegebenenfalls (e) Treibmittel, (f) Kettenverlängerungs- und oder Vernetzungsmittel und (h) Hilfsmittel und/oder Zusatzstoffe und ausreagieren der Reaktionsmischung zum Polyurethan, wobei der Phosphorsäureester der allgemeinen Formel (R¹-O)₃-P=O entspricht, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe, bestehend aus Stickstoff, Sauerstoff, Fluor, Chlor und Brom, enthalten, das Polyphosphat der allgemeinen Formel -[P(O)(O-R'⁺)-O]ₙ- entspricht, wobei n für ganze Zahlen von 2 bis 20 steht, R'⁺ für Alkalimetallkationen oder Ammoniumkationen steht, der Phosphonsäureester der allgemeinen Formel (R³)(R²-O)₂-P=O entspricht, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen steht und der Phosphorigsäureester der allgemeinen Formel (R⁴-O)₃-P entspricht, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten.

Bei den erfindungsgemäßen Polyurethanen handelt es sich bevorzugt um Polyurethanschaumstoffe, besonders bevorzugt um Polyurethanformschaumstoffe. Insbesondere handelt es sich bei den erfindungsgemäßen Polyurethanen um Integralschaumstoffe, insbesondere um solche gemäß DIN 7726 mit einer Randzone, die bedingt durch den Formgebungsprozess eine höhere Dichte als der Kern aufweist.

Die erfindungsgemäßen Polyurethanschaumstoffe weisen bevorzugt eine mittlere Dichte von 100 bis 800 g/L, besonders bevorzugt 150 bis 500 g/L und insbesondere 200 bis 400 g/L auf. Weisen diese Schaumstoffe eine Haut auf, handelt es sich hierbei um die über den Gesamtschaumstoffformkörper, das heißt über den Kern und die Randzone, gemittelte Dichte.

Die zur Herstellung der erfindungsgemäßen Polyurethanintegralschaumstoffe verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 20 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen hochmolekularen Verbindungen mit gegenüber Isocyanate reaktiven Wasserstoffatomen eingesetzt. Besonders bevorzugt werden als Polyole (a-2) Polyester eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt werden als Kettenverlängerer Monoethylenglycol und 1,4-Butandiol eingesetzt.

Höhermolekulare Verbindungen b) mit mindestens zwei gegen Isocyanatgruppen reaktiven Wasserstoffatomen können beispielsweise Polyetherole oder Polyesterole sein.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so daß die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 2 bis 3 und Molekulargewichte von 1.000 bis 8.000, vorzugsweise von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. □-Caprolacton oder Hydroxycarbonsäuren, z.B. D-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt ausschließlich Styrol verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymer-polyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Katalysatoren c) beschleunigen die Reaktion der Polyole (b) und gegebenenfalls Kettenverlängerungs- und Vernetzungsmittel (d) sowie chemischem Treibmittel (e) mit den organischen, gegebenenfalls modifizierten Polyisocyanaten (a) stark. Dabei enthalten die Katalysatoren (c) einbaubare Aminkatalysatoren. Diese weisen mindestens eine, vorzugsweise 2 bis 8 und besonders bevorzugt 2 bis 3 gegenüber Isocyanaten reaktive Gruppen auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol).

Neben den einbaubaren Aminkatalysatoren können weiter übliche Katalysatoren eingesetzt zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Komponente (d) enthält Phosphorsäureester, Polyphosphate, Phosphonsäureester und/oder Phosphorigsäureester. Diese weisen vorzugsweise ein Molekulargewicht von mindestens 350 g/mol auf.

Dabei werden als Phosphorsäureester solche Ester der Phosphorsäure eingesetzt, die der allgemeinen Formel

(R¹-O)₃-P=O

entsprechen, wobei die drei Reste R¹ unabhängig voneinander für organische Reste stehen, die eine oder mehrere Phenylgruppen, eine oder mehrere Phosphorsäuregruppen oder deren Ester und/oder ein oder mehrere Atome, ausgewählt aus der Gruppe bestehend aus Stickstoff, Sauerstoff, Fluor, Chlor und Brom enthalten. Dabei enthalten die Reste R¹ jeweils unabhängig voneinander vorzugsweise 1 bis 20, besonders bevorzugt 2 bis 10 und insbesondere 2 bis 5 Kohlenstoffatome und vorzugsweise Verzweigungen aufweisen. Bevorzugt sind Reste, die Chloratome oder Sauerstoffatome, beispielsweise als OH-Endgruppen, aufweisen. Beispiele für die Reste R1 sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten.

Vorzugsweise enthalten die erfindungsgemäßen Phosphorsäureester mindestens zwei, vorzugsweise zwei bis 50, besonders bevorzugt 2 bis 20 Phosphatgruppen in einem Molekül, die durch mehrwertige Reste, insbesondere durch zweiwertige Reste -R"- verbunden sind. Dabei steht R" für einen organischen Rest mit 1 bis 20, vorzugsweise 2 bis 10 und insbesondere 2 bis 5 Kohlenstoffatomen, die linear oder verzweigt, bevorzugt verzweigt, sein können und gegebenenfalls ein oder mehrere Atome, ausgewählt aus der Gruppe bestehend aus Stickstoff, Sauerstoff, Fluor, Chlor und Brom enthalten. Dies Phosphorsäureester gemäß Erfindung umfassen beispielsweise 2,2-bis(chloromethyl)trimethylene-bis(bis(2-chloroethyl)phosphat), Tris(2-butoxyethyl)phosphat, Tris(1,3-dichlor-2-isopropyl)phosphat Tris(2-chlorisopropyl)phosphat und oligomere Alkylphosphate mit Ethylenoxydbrücken, wie Fyrol® PNX der Firma ICL Industrial Products.

Erfindungsgemäße Polyphosphate sind Verbindungen der allgemeinen Formel -[P(O)(O-R'⁺)-O]ₙ-, wobei n für ganze Zahlen von 2 bis 10000 steht und R'⁺ für Alkalimetallkationen oder Ammoniumkationen steht. Als Endgruppen können beliebige Strukturen dienen, vorzugsweise Strukturen der allgemeinen Formel -O-P(O)(O-R'⁺)₂, wobei R'⁺ die oben angegebene Bedeutung hat. Beispielsweise kann als Polyphosphat Ammoniumpolyphosphat eingesetzt werden.

Erfindungsgemäße der Phosphonsäureester sind Verbindungen, die der allgemeinen Formel (R³)(R²-O)₂-P=O entsprechen, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und vorzugsweise Verzweigungen aufweisen und der Rest R³ entweder für Wasserstoff oder aromatische, aliphatische oder cycloaliphatische Reste mit 1 bis 10, vorzugsweise 1 bis 5 und insbesondere 1 bis 3 Kohlenstoffatomen steht, die gegebenenfalls ebenfalls Heteroatome enthalten.

Dabei enthalten die Reste R² jeweils unabhängig voneinander vorzugsweise 1 bis 20, besonders bevorzugt 2 bis 10 und insbesondere 2 bis 5 Kohlenstoffatome. Bevorzugt sind Reste, die Chloratome oder Sauerstoffatome, beispielsweise als OH-Endgruppen, aufweisen. Beispiele für die Reste R² sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten. Ein Beispiel für einen erfindungsgemäßen Phosphonsäureester ist Methylphosphonatdi(diethylenglycol)ester.

Als Phosphorigsäureester werden Verbindungen der allgemeinen Formel (R⁴-O)₃-P eingesetzt, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten. Bevorzugt sind Reste, die Chloratome oder Sauerstoffatome, beispielsweise als OH-Endgruppen, aufweisen. Dabei enthalten die Reste R⁴ jeweils unabhängig voneinander vorzugsweise 1 bis 20, besonders bevorzugt 2 bis 10 und insbesondere 2 bis 5 Kohlenstoffatome. Bevorzugt sind Reste, die Chloratome oder Sauerstoffatome, beispielsweise als OH-Endgruppen, aufweisen. Insbesondere enthalten Phosphite OH-Endgruppen. Beispiele für die Reste R⁴ sind Ethylenchlorid, Propylenchlorid, Butylenchlorid, Ethylenoxyd, Propylenoxyd, Butylenoxyd uns Polyethyalkylenoxide mit vorzugsweise 2 bis 10 Widerholungseinheiten. Beispielsweise wird als Phosphorigsäureester Tris(dipropylenglycol)phosphit eingesetzt.

Besonders bevorzugte Komponenten (d) sind Verbindungen, die mindestens zwei Phosphatgruppen im Molekül aufweisen. Beispiele sind 2,2-bis(chloromethyl)trimethylene-bis(bis(2-chloroethyl)phosphat), Ammoniumpolyphosphat, und Polyalkylphosphat mit Ethylenoxydbrücken. Weiter bevorzugt ist Tris(1,3-dichlor-2-isopropyl)phosphat, Tris(2-chlorisopropyl)phosphat, Tris(2-butoxyethyl)phosphat, oligomere Alkylphosphate mit Ethylenoxydbrücken und Methylphosphonatdi(diethylenglycol)ester. Ganz besonders bevorzugt sind sind 2,2-bis(chloromethyl)trimethylene-bis(bis, (2-chloroethyl)phosphat), Methylphosphonatdi(diethylenglycol)ester, Tris(1,3-dichlor-2-isopropyl)phosphat, oligomere Alkylphosphate mit Ethylenoxydbrücken und Ammoniumpolyphosphat. Insbesondere bevorzugt sind 2,2-bis(chloromethyl)trimethylene-bis(bis, (2-chloroethyl)phosphat) und oligomere Alkylphosphate mit Ethylenoxydbrücken. Diese Verbindungen sind kommerziell erhältlich.

Dabei ist der Anteil der Komponente (d), bezogen auf das Gesamtgewicht der Komponenten (a) bis (f), vorzugsweise kleiner als 3 Gew.-%, besonders bevorzugt 0,05 bis 2%, weiter bevorzugt 0,1 bis 1,5% und insbesondere 0,15 bis 1,0%, jeweils bezogen auf das Gesamtgewicht der Komponenten (a) bis (f). Zur Verbesserung der Hitzelagerung genügt bereits ein Anteil der Komponente (d), bezogen auf das Gesamtgewicht der Komponenten (a) bis (f), von vorzugsweise 0,1 bis 0,4% und besonders bevorzugt 0,15 bis 0,3%, jeweils bezogen auf das Gesamtgewicht der Komponenten (a) bis (f). Besonders bevorzugt enthalten die erfindungsgemäßen Polyurethane keine weiteren Substanzen, die üblicherweise als Flammschutzmittel in Polyurethanen eingesetzt werden.

Ferner sind bei der Herstellung von Polyurethanschaumstoffen Treibmittel (e) zugegen. Diese Treibmittel (e) können Wasser enthalten. Als Treibmittel (e) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.-%, bezogen auf das Gesamtgewicht der Komponenten (a) bis (g).

Als Kettenverlängerungsmittel und/oder Vernetzungsmittel (f) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol, Glycerin oder Mischungen davon und insbesondere Monoethylenglycol oder Mischungen, enthaltend Monoethylenglycol, eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (c), zum Einsatz.

Der Reaktionsmischung zur Herstellung der Polyurethanschäume können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Gummivulkanistionshilfsmittel, Füllstoffe, Farbstoffe, Pigmente, Hydrolyseschutzmittel, geruchsabsorbierende Substanzen und fungistatische und/oder bakteriostatisch wirkende Substanzen. Diese sind bekannt und werden üblicherweise bei der Herstellung von Polyurethanen eingesetzt.

Weiter ist Gegenstand der Erfindung ein Verfahren zur Herstellung der erfindungsgemäßen Polyurethane, bei dem die Komponenten (a) bis (d) und gegebenenfalls (e) bis (g) zu einer Reaktionsmischung vermischt werden, welche dann zum Polyurethan ausreagiert wird. Dabei werden die vorzugsweise in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäße bevorzugten Polyurethanintegralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Dazu werden die Ausgangskomponenten vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (g) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Integralschaumstoffen eine Dichte von vorzugsweise 0,08 bis 0,75 g/cm³, besonders bevorzugt von 0,15 bis 0,75 g/cm³ und insbesondere von 0,25 bis 0,70 g/cm³ aufweisen. Die Verdichtungsgrade zur Herstellung der erfindungsgemäßen Polyurethanintegralschaumstoffe liegen im Bereich von 1,1 bis 8,5, vorzugsweise von 2,1 bis 7,0.

Die erfindungsgemäßen Polyurethane werden vorzugsweise im Automobilinnenraum eingesetzt. Vorzugsweise handelt es sich dabei um Automobilinnenraumteile, wie Lenkräder, Armaturenbretter, Türverkleidungen, Kopfstützen oder Schaltknäufe. Dabei zeigen erfindungsgemäße Polyurethane ein vorzügliches Alterungsverhalten, insbesondere bei der Hitzelagerung über 7 Tage bei 140 °C oder der Feucht-Wärmealterung über 3 Zyklen von 5 Stunden im Autoklaven bei 120 °C und 100 % relativer Feuchte. Dabei ist insbesondere die Zugfestigkeit als auch die maximale Dehnung verbessert. Die Bestimmung der Feucht-Wärmelagerung sowie der Hitzelagerung erfolgte gemäß DIN EN ISO 2440.

Im Folgenden wird die Erfindung anhand von Beispielen verdeutlicht.

Ausgangsmaterialien:
- Polyol A:: Polyetherol mit einer OH-Zahl 35 mgKOH/g und einer Funktionalität von 2.7 auf Basis von Ethylenoxyd und Propylenoxyd, einem Propylenoxydgehalt von 84% und einem Ethylenoxydgehalt von 14 %
- Polyol B:: Graftpolyol mit 45% Feststoffgehalt (Styrolacrylnitril) in Polyol A als Trägerpolyol
- MEG:: Monoethylenglykol

- Isopur SA-21050:: Schwarzpaste der Firma ISL-Chemie
- Polycat 15:: Katalysator der Firma Air Products
- Jeffcat ZF-1 0:: Katalysator der Firma Huntsman

### Phosphorverbindungen

- P1 :: Tris(1,3-dichlor-2-isopropyl)phosphat
- P2:: oligomeres Alkylphosphat mit Ethylenoxydbrücken
- P3:: Methylphosphonatdi(diethylenglycol)ester
- P4:: Exolit® AP422 - Ammoniumpolyphosphat der Firma Clariant
- P5:: Isopropyliertes Triarylphosphat
- P6:: Tris (dipropyleneglycol) phosphit
- P7:: Tris(2-butoxyethyl)phosphat
- P8:: TCPP Tris(2-chlorisopropyl)phosphat
- P9:: Tributylphosphat (Vergleich)
- P10:: Tributylphosphit (Vergleich)
- P11:: TNPP - Trisnonylphenyl phosphite (Vergleich)
- P12:: Disflamoll® TOF - Tris(2-ethylhexyl)phosphat (Vergleich) aliphatisches Phosphat der Firma Lanxess

Isocyanat: Carbodiimid-modifiziertes 4,4'-MDI mit einem NCO-Gehalt von 27.8

Die Mischung A wurde durch Abmischung von folgenden Komponenten vorbereitet:
79.9 TI. Polyol A
4.8 TI. Polyol B
8.1 TI. MEG
5.0 TI. Isopur SA-21050
0.6 TI. Wasser
0.8 TI. Polycat 15
0.8 TI. Jeffcat ZF-10
0.25 - 2 Teile Phosphorverbindungen (s. Tabelle)

Die Mischung A und die Isocyanat-Komponente wurden bei einem Isocyanatindex von 102 miteinander vermischt und in eine geschlossene Form gegeben, so dass Formteile mit einer mittleren Dichte von 380 g/L erhalten wurden.
Zur Bestimmung der Messwerte für die mechanischen Eigenschaften wurde gemäß der folgenden Normen vorgegangen.

| Eigenschaft | Dimension | DIN-Norm |
|---|---|---|
| Härte | Shore A | 53505 |
| Zugfestigkeit | MPa | 1798 |
| Dehnung | % | 1798 |
| Dichte | g/mm³ | 845 |

Zur Durchführung der Hitzelagerung und die Feuchtwärmealterung wurde gemäß der Norm DIN EN ISO 2440 vorgegangen.

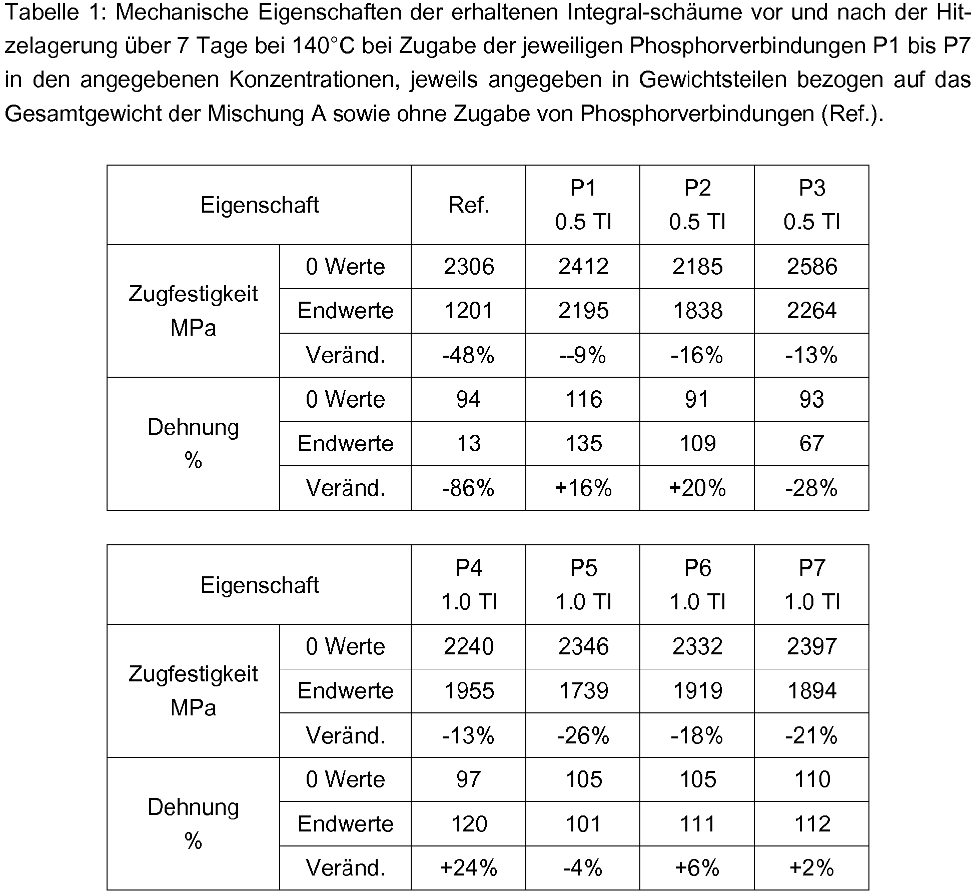

**Tabelle 2: Mechanische Eigenschaften der erhaltenen Integralschäume vor und nach der Hitzelagerung über 7 Tage bei 140°C bei Zugabe der jeweiligen Phosphorverbindungen P8 bis P12 in den angegebenen Konzentrationen, jeweils angegeben in Gewichtsteilen bezogen auf das Gesamtgewicht der Mischung A.**

| Eigenschaft | | P8 0.5 TI | P8 1.0 TI | P9 1.0 TI | P10 1.0 TI | P11 1.0 TI | P12 1.0 TI |
|---|---|---|---|---|---|---|---|
| Zugfestigkeit MPa | 0 Werte | 2266 | 2272 | 2260 | 2297 | 2218 | 2222 |
| | Endwer- | 1131 | 1681 | 1373 | 1256 | 1338 | 1217 |
| | Veränd. | -51% | -26% | -39% | -45% | -40% | -45% |
| Dehnung % | 0 Werte | 105 | 101 | 98 | 100 | 93 | 92 |
| | Endwer- | 29 | 96 | 59 | 47 | 68 | 41 |
| | Veränd. | -73% | -5% | -40% | -53% | -27% | -55% |

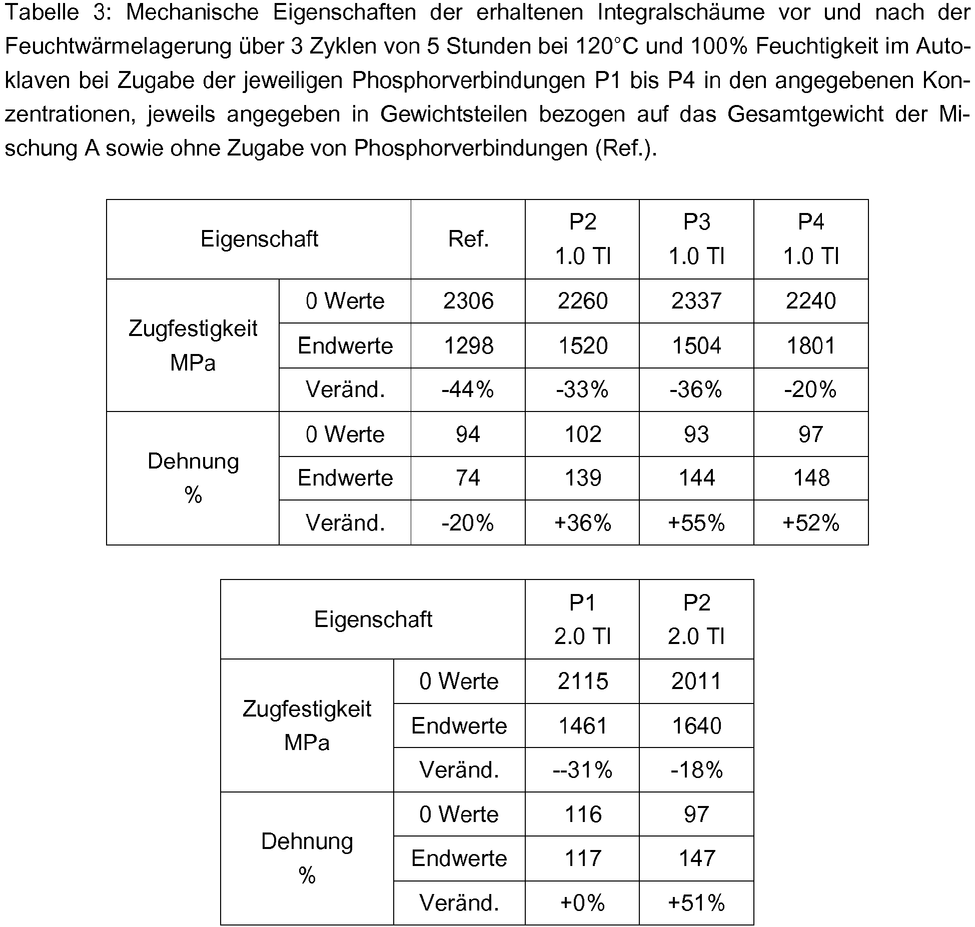

**Tabelle 4: Mechanische Eigenschaften der erhaltenen Integralschäume vor und nach der Feuchtwärmelagerung über 3 Zyklen von 5 Stunden bei 120°C und 100% Feuchtigkeit im Autoklaven bei Zugabe der jeweiligen Phosphorverbindungen P9 bis P12 in den angegebenen Konzentrationen, jeweils angegeben in Gewichtsteilen bezogen auf das Gesamtgewicht der Mischung A..**

| Eigenschaft | | P9 1.0 TI | P10 1.0 TI | P11 1.0 TI | P12 1.0 TI |
|---|---|---|---|---|---|
| Zugfestigkeit MPa | 0 Werte | 2260 | 2297 | 2218 | 2222 |
| | Endwerte | 1374 | 1341 | 1301 | 1084 |
| | Veränd. | -39% | -42% | -41% | -51% |
| Dehnung % | 0 Werte | 98 | 100 | 93 | 92 |
| | Endwerte | 117 | 123 | 109 | 92 |
| | Veränd. | +19% | +23% | +17% | 0% |

Schließlich wurden ausgehend von den Mischungen A und dem Isocyanat unter Einsatz von jeweils 0,5 Gewichtsteilen der Phosphorverbindungen P1, P2 und P3, bezogen auf das Gesamtgewicht der Mischung A, sowie als Referenz ohne Einsatz von Phosphorverbindung Lenkräder hergestellt und 7 Tage bei 140 °C gealtert. Dabei ist das Polyurethan des Lenkrads ohne Phosphorverbindung rissig und bröselt zu Teil ab, während das Polyurethan der erfindungsgemäß hergestellten Lenkräder optisch unverändert ist.

## Patentansprüche

1. Polyurethane erhältlich durch Vermischen von
(a) Polyisocyanat,
(b) polymeren Verbindungen mit gegenüber Isocyanaten reaktiven Gruppen,
(c) Katalysatoren, enthaltend einbaubare Aminkatalysatoren,
(d) Phosphorsäureester, Polyphosphate, Phosphonsäureester und/oder Phosphorigsäureester und gegebenenfalls
(e) Treibmittel,
(f) Kettenverlängerungs- und oder Vernetzungsmittel und
(g) Hilfsmittel und/oder Zusatzstoffe
zu einer Reaktionsmischung und ausreagieren der Reaktionsmischung zum Polyurethan,
wobei der Phosphorsäureester der allgemeinen Formel
(R¹-O)₃-P=O
entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe, bestehend aus Stickstoff, Sauerstoff, Fluor, Chlor und Brom, enthalten,
das Polyphosphat der allgemeinen Formel
-[P(O)(O-R'⁺)-O]ₙ-
entspricht, wobei n für ganze Zahlen von 2 bis 10000 steht, R'⁺ für Alkalimetallkationen oder Ammoniumkationen steht
der Phosphonsäureester der allgemeinen Formel
(R³)(R²-O)₂-P=O
entspricht, wobei die Reste R² unabhängig voneinander für organische Reste stehen, die ein oder mehrere Atome, ausgewählt aus der Gruppe, bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen steht,
der Phosphorigsäureester der allgemeinen Formel
(R⁴-O)₃-P
entspricht, wobei die Reste R⁴ unabhängig voneinander für organische Reste stehen, die ein oder mehrere Atome, ausgewählt aus der Gruppe, bestehend aus Stickstoff, Sauerstoff, Fluor, Chlor und Brom, enthalten.

2. Polyurethane nach Anspruch 1, **dadurch gekennzeichnet, dass** die Phosphorsäureester, Phosphonsäureester und/oder Phosphorigsäureester gegenüber Isocyanatgruppen reaktive Gruppen (OH-Gruppen) enthalten.

3. Polyurethane nach Anspruch 1 oder 2, wobei der Anteil der Komponente (d), bezogen auf das Gesamtgewicht der Komponenten (a) bis (f), kleiner als 3 Gew.-% ist

4. Polyurethane nach einem der Ansprüche 1 bis 3, **dadurch gekennzeichnet, dass** die Komponente (d) Verbindungen mit mindestens zwei Phosphatgruppen im Molekül enthält.

5. Polyurethane nach einem der Ansprüche 1 bis 4, **dadurch gekennzeichnet, dass** das Polyurethan ein Polyurethanschaumstoff mit einer mittleren Dichte von 100 bis 850 g/L ist.

6. Polyurethane nach Anspruch 5, **dadurch gekennzeichnet, dass** der Polyurethanschaumstoff ein Polyurethanformschaumstoff ist.

7. Polyurethane nach Anspruch 6, **dadurch gekennzeichnet, dass** der Polyurethanformschaumstoff eine mittlere Dichte von 150 bis 500 g/L aufweist.

8. Polyurethane nach einem der Ansprüche 1 bis 7, **dadurch gekennzeichnet, dass** das Polyurethan ein Automobilinnenraumteil ist.

9. Polyurethane nach Anspruch 8, **dadurch gekennzeichnet, dass** das Automobilinnenraumteil ein Lenkrad, ein Armaturenbrett, eine Türinnenverkleidung, eine Kopfstütze oder ein Schaltknauf ist.

10. Polyurethane nach einem der Ansprüche 1 bis 9, **dadurch gekennzeichnet, dass** diese keine weiteren Flammschutzmittel enthalten.

11. Verfahren zur Herstellung von Polyurethanen bei dem man
a) Polyisocyanat,
b) polymeren Verbindungen mit gegenüber Isocyanaten reaktiven Gruppen,
c) Katalysatoren, enthaltend einbaubare Aminkatalysatoren,
d) Phosphorsäureester, Polyphosphate, Phosphonsäureester und/oder Phosphorigsäureester und gegebenenfalls
e) Treibmittel,
f) Kettenverlängerungs- und oder Vernetzungsmittel und
g) Hilfsmittel und/oder Zusatzstoffe
zu einer Reaktionsmischung vermischt und die erhaltene Reaktionsmischung zum Polyurethan ausreagieren
lässt,
wobei der Phosphorsäureester der allgemeinen Formel
(R¹-O)₃-P=O
entspricht, wobei die drei Reste R¹ unabhängig voneinander für organische Reste stehen, die eine oder mehrere Phenylgruppen, eine oder mehrere Phosphorsäuregruppen (Polyalkylphosphat mit Ethylenoxyd) oder deren Ester und/oder ein oder mehrere Atome, ausgewählt aus der Gruppe bestehend aus Stickstoff, Sauerstoff, Fluor, Chlor und Brom enthalten,
das Polyphosphat der allgemeinen Formel
-[P(O)(O-R'⁺)-O]ₙ-
entspricht, wobei n für ganze Zahlen von 2 bis 20 steht, R'⁺ für Alkalimetallkationen oder Ammoniumkationen steht
der Phosphonsäureester der allgemeinen Formel
(R³)(R²-O)₂-P=O
entspricht, wobei die Reste R² unabhängig voneinander für organische Reste stehen, die ein oder mehrere Atome, ausgewählt aus der Gruppe bestehend aus Stickstoff, Sauerstoff, Fluor, Chlor und Brom, enthalten und der Rest R³ entweder für Wasserstoff oder aromatische, aliphatische oder cycloaliphatische Reste mit 1 bis 10 Kohlenstoffatomen steht,
der Phosphorigsäureester der allgemeinen Formel
(R⁴-O)₃-P
entspricht, wobei die Reste R⁴ unabhängig voneinander für organische Reste stehen, die ein oder mehrere Atome, ausgewählt aus der Gruppe bestehend aus Stickstoff, Sauerstoff, Fluor, Chlor und Brom enthalten.

12. Verwendung eines Polyurethans nach einem der Ansprüche 1 bis 10 im Automobilinnenraum.
